# EUROPEAN PATENT SPECIFICATION

(11) **EP 2 857 859 B1**
(45) Date of publication and mention of the grant of the patent: **04.05.2016**
(21) Application number: 14185179.0
(22) Date of filing: 17.09.2014
(51) Int. Cl.: G01S 7/40, G01S 13/78

(54) **Mode-S conflict detection**
Mode S Konflikterkennung
Détection de conflit en Mode S

(30) Priority: 18.09.2013 GB 201316553
(43) Date of publication of application: 08.04.2015
(73) Proprietor: Cyrrus Limited, Hertfordshire CM22 7WE (GB)
(72) Inventor: Wills, Martyn, Thirsk, YO7 3NY (GB)
(74) Representative: Hughes, Andrea Michelle

(56) References cited:
- GB-A- 2 477 103
- Eurocontrol: "EUROPEAN ORGANISATION FOR THE SAFETY OF AIR NAVIGATION EUROPEAN AIR TRAFFIC MANAGEMENT PROGRAMME Principles of Mode S Operation and Interrogator Codes Edition Number : 2.3 Edition Date : 18/03/2003 Status : Draft Intended for : General Public", , 18 March 2003 (2003-03-18), XP055172991, Retrieved from the Internet: URL:http://www.eurocontrol.int/sites/defau lt/files/publication/files/surveillance-mo des-principles-of-modes-operation-and-inte rrogator-codes-20030318.pdf [retrieved on 2015-03-02]

## Description

The present invention is concerned with monitoring the detection range of, in particular, aircraft control tracking and navigation systems. Although the invention will be described in relation to such systems, the basic inventive concept can have applications in other detection systems in which a detector or interrogator monitors objects within a range.

The invention is particularly concerned with providing a system for and method of monitoring when the range of a detector or interrogator becomes reduced or adversely affected.

In the most preferred embodiments, the present invention is concerned with an apparatus and method for identifying a decrease in detection range of a detector or interrogator caused by the effects of another interrogator having an overlapping range of detection.

Aircraft tracking and navigation control systems involve the use of radars each having a respective range of detection to detect and monitor the presence and progress of aircraft within that range of detection.

In order to avoid any gaps, and in view of the high volume of air traffic, many such radars are used and any particular air navigation service provider (ANSP) will usually have several radars covering a range of airspace and these radars, as well as radars from other ANSPs, will usually have some overlap in their range of detection.

To ensure proper, safe and effective navigation and control, control signals sent from each radar usually include some means of identifying the transmitting radar and responding aircraft will also transmit information identifying the appropriate radar and information identifying the aircraft. This avoids conflict between signals to and from radar and aircraft.

A commonly used encoding system is known as Mode S which is an evolution of the so-called secondary surveillance radar (SSR) and uses selective addressing of aircraft targets.

Every Mode S equipped aircraft is allocated a unique airframe code (e.g. a 24-bit ICAO - International Civil Aviation Organisations - aircraft address) and the aircraft transponder will only reply to interrogations addressed either to its own specific airframe code or interrogations addressed to all aircraft within the range of the detector - so-called "all call" interrogations.

To allow efficient operation of, and to avoid conflicts between, Mode S interrogators with overlapping coverage or range of detection, each interrogator is also allocated an Interrogator Code (IC). The IC is transmitted as part of the interrogation message and is also included in the reply from the aircraft.

An interrogator performs regular "all call" interrogations to pick up new aircraft entering its detection range. As aircraft that have already responded to previous "all call" interrogations are already being tracked by the interrogator, the "all call" interrogations are only intended to pick up new aircraft or targets. Therefore, an aircraft that has already responded to an "all call" interrogation should not respond again to subsequent interrogations from the interrogator. To ensure this, so-called selective interrogation is used. Once an aircraft has responded to an "all call" interrogation, the interrogator sends control information back to the aircraft (identified by the aircraft code and the interrogator code) to disregard all further "all calls" from any sensors or interrogators using the same IC. This is known as "lockout" which means that the target will not reply to an "all call" having the same IC for a predetermined period, e.g. 18 seconds, in preferred systems.

Thus, the basic process of acquisition and tracking is that an aircraft enters the sensor coverage or range of detection of an interrogator identified by the code IC and receives an "all call" interrogation that includes the IC in the signal.

The aircraft transponder generates an "all call" reply which includes the aircraft's specific airframe code and the IC that was in the original received interrogation.

The ground sensor of the interrogator receives the reply addressed to it, by means of the IC code, and decodes the aircraft address and position and has now acquired that aircraft of the target. The interrogator can then track the progress of the aircraft and can communicate with the aircraft, if necessary. During subsequent so-called roll-call periods where new "all call" interrogations are emitted, the interrogator sends selective interrogations which contain control information that instructs the aircraft transponder of the already-logged aircraft to disregard further all-calls from all interrogators using that particular IC.

Thus, once an aircraft is being tracked by an interrogator, it will not respond to an "all call" interrogation from an interrogator having that specific IC.

Ideally, all interrogators would have a unique code as with the aircraft. Unfortunately, the Mode S data structure only supports a limited number (currently 16) Interrogator Identifier (II) codes, some of which are reserved for special purposes.

To alleviate this problem, additional (currently 63) Surveillance Identifier (SI) codes are combined with the II code to expand the number of possible identifiers. However, not all aircraft are equipped to deal with SI codes.

The allocation of Mode S Interrogator Codes in Europe is coordinated to prevent interrogator code conflicts.

Due to the high number of Mode S interrogators within a relatively small area in Europe, the management of IC allocation and the implementation of lockout maps are very important to prevent code conflicts between neighbouring Mode S interrogators.

Code conflicts can still occur due to interrogator configuration faults and incorrect application of lockout maps.

EC 262/2009 recognises the safety significance of code conflicts and requires each ANSP and interrogator operator to implement means of monitoring and detecting code conflicts.

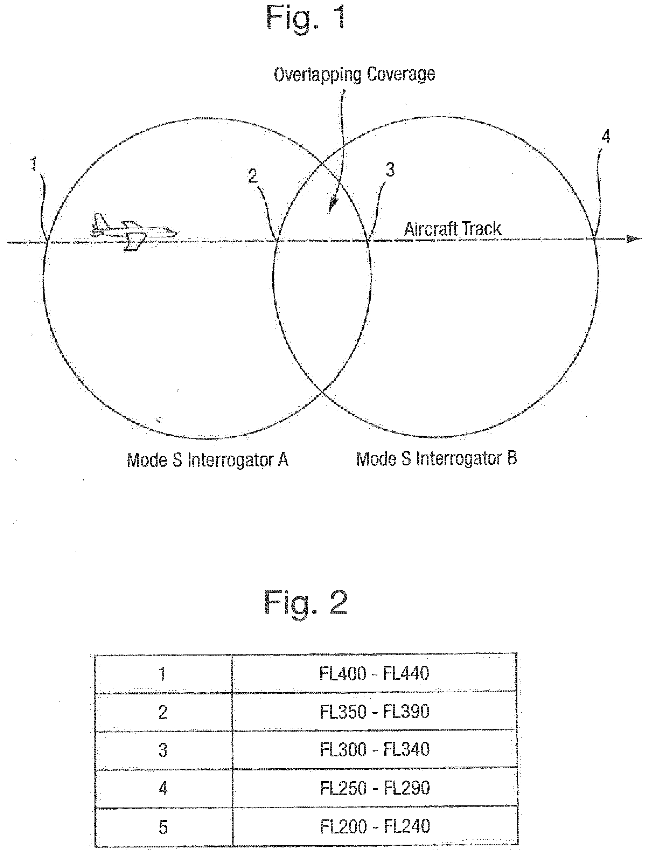

The problems mentioned above can be clearly seen with reference to Figure 1.

Consider two Mode S interrogators, A and B, with overlapping coverage.

Interrogator A will track and lockout all aircraft targets within its entire range, including the area of overlap with the range of interrogator B i.e. it will pick up a target, track it and instruct it not to respond to further "all calls" incorporating the IC of interrogator A while in the range of detection of A. Similarly, interrogator B will track and lockout all aircraft targets within its entire range, including the overlapping area.

As long as the Mode S IC identifiers for interrogator A and interrogator B are different, this will not matter, since an aircraft detected by interrogator A, for example, will, once detected by interrogator A, be instructed not to respond to any further all-calls from an interrogator having the IC code of interrogator A. All-calls from interrogators having other IC codes will not be affected and will still be responded to by the aircraft. The effect of this would then be that an aircraft entering the range of interrogator A would only respond once to all-calls from that interrogator, due to being locked out for any subsequent all-calls, but, once entering the overlapping range, would also respond to an all-call from interrogator B (having a different IC), after which it would then be locked out for interrogator B.

If the Mode S IC is the same, however, for both interrogators A and B, then both interrogators will lose targets in the area of overlap as well as a small distance beyond the area of overlap, due to the fact that any lockout applies for a particular length of time, e.g. 18 seconds.

In Fig. 1, it can be seen that an aircraft enters the range of interrogator A at point 1. Interrogator A will acquire the aircraft at that point and, also at that point, will apply lockout to the aircraft transponder, preventing replies to "all call" interrogations identified by interrogator A's IC code.

As the aircraft enters the overlapping coverage between points 2 and 3, it will not reply to "all call" interrogations from interrogator B, as these have the same IC code and the aircraft has been instructed, by interrogator A, within whose detection range the aircraft still is, not to respond to such calls.

The aircraft will only reply to an "all call" interrogation from interrogator B once it is out of the range of interrogator A, after passing point 3 plus the additional time interrogator A instructs the lockout to apply. This is usually 18 seconds which, at a speed of 600 knots, is a distance of 3 nautical miles.

Thus, because of the IC code conflict, the range of detection of interrogator B is reduced.

Conversely, interrogator B would be unaffected, in terms of its range of detection, by an aircraft travelling in the opposite direction, whereas interrogator A would be unable to detect it until after it had left the range of overlap plus the additional time (e.g. 18 seconds).

An interrogator is unable to detect code conflict causing this decrease in detection range, as it has no means of communication with aircraft in the affected area.

The aircraft is unable to detect code conflicts as it has been instructed not to reply to "all call" messages from interrogators having the same IC.

The present invention aims to solve these problems so as to improve the efficiency and safety of such interrogation systems.

2. The invention is defined by the appended claims.

The invention is particularly applicable to situations where two interrogators have an overlapping range of detection, but can, in theory, be used to identify any reduction in range of detection of an interrogator or sensor.

Preferred embodiments of this invention will now be described with reference to the accompanying drawings which are given by way of example only.
Figure 1 is a schematic diagram showing coverage or ranges of detection of two interrogators with overlapping coverage.
Figure 2 shows an example of how flight heights can be grouped into height bands.
Figure 3 is an example of how a range can be grouped into different sectors or angles.
Figure 4 is a flowchart showing how, in one example, received signals can be filtered for analysis.
Figure 5 shows how the received information might, in preferred embodiments, be grouped into sector/height bins.
Figure 6 is a flowchart showing how sector/height bin data, for example as shown in Fig. 5, might be processed.
Figure 7 is a flowchart showing how code conflicts can be identified.
Figure 8 is a flowchart how received information might be used to monitor performance of the system.
Figure 9 is a graphical representation of the ranges identified before inbound and outbound signals to identify code conflict using an embodiment of the invention.

The present invention aims at providing an indication of a decrease in detection range of an interrogator, particularly due to IC code conflict, by observing the effect of such a conflict, rather than trying to identify the conflict itself.

An effect of the conflict, as described above, is that the range of detection of an interrogator is decreased in an area of conflict. This decrease in range is detected in the present invention by monitoring and analysing detection signals for targets travelling through the range of detection of the interrogator in different directions.

For example, if inbound and outbound detections are monitored, it is possible to identify where the detection ranges diverge, thus providing an indication, if, for example, the detection range for outbound targets is significantly less than for inbound targets, or vice versa, of an area of IC code conflict or where there is another reason for the range of detection of the interrogator to be decreased.

In the preferred arrangement, a conflict detection module is provided. This may be part of the interrogator itself, but, in preferred embodiments, is a stand-alone unit that can be used with any interrogator and does not affect the structure of the interrogator or its operation. The conflict detection module receives and examines the data stream (in most systems known as the ASTERIX data stream) from the interrogator, providing information on detection within the range of detection of the interrogator.

More specifically, in the most preferred embodiment, the code conflict detection module compares the detection range of the interrogator for inbound and outbound tracks to identify areas of code conflict.

In the described example, an interrogator identifies an aircraft entering its range of detection and registers that aircraft for subsequent tracking. The interrogator can monitor the progress of the aircraft within the range of detection and can also communicate with the aircraft with messages specifically intended for that aircraft.

The interrogator has picked up the aircraft entering its range of detection from an "all call" interrogation regularly sent out by the interrogator, to which the aircraft responded as it entered the range of detection of the interrogator. Using selective interrogation, the interrogator would then instruct that aircraft not to respond to any further all-call interrogations from that interrogator (identified by the interrogator's IC code and, therefore, the aircraft would then only respond to the interrogator sending messages specifically addressed to that aircraft, for control of or communication with that particular aircraft.

Whilst being tracked by interrogator A, the interrogator obtains track data for the aircraft. A commonly used track data system is known as ASTERIX.

If, whilst still in the range of detection of interrogator A, the aircraft enters an overlapping range of detection of another interrogator, interrogator B, it will be within range of receiving "all call" interrogations from interrogator B.

As mentioned above, if interrogator B has a different IC code from interrogator A, then the aircraft will respond to interrogator B's "all calls" and will be registered by interrogator B and tracked. It will also receive a communication from Interrogator B to lock out response of the aircraft to any further all call interrogations from interrogator B, identified by interrogator B's IC code.

If, however, interrogator B has the same IC code as interrogator A, then, when entering the overlapping region for the range of detection of interrogator B, the aircraft will not respond to interrogator B's all call interrogation, as it has been locked out by interrogator A, and the aircraft will not, therefore, be registered, for tracking, by interrogator B until it is out of the overlapping region.

The present invention, therefore, provides a code conflict detector (CCD) to identify when such an IC conflict occurs, by identifying the effects of such conflict, since neither the interrogators nor the aircraft are able to identify the conflict itself.

The CCD is configured to obtain the track data from the interrogator and to process this to identify the effects of an IC code conflict - i.e. to identify a reduction in the range of detection of the interrogator.

Although, in the most simple system, the CCD would read and process all of the track data from the interrogator, the efficiency of the system can be improved by filtering the data.

For example, tracks close to the interrogator - i.e. where the aircraft is flying very close to the interrogator in question, do not necessarily need to be considered for assessment. The CCD can, therefore, filter out a configurable percentage of the designated operational coverage (DOC) range closer to the interrogator and only assess those tracks that are in the outer part of the DOC range.

In addition, or alternatively, if a lockout map is implemented, the system may filter out any tracks outside of the lockout map. A "lockout map" is an area, allocated to an interrogator, within which lockout associated with the interrogator is restricted. The reason for this is that although the coverage of the interrogators might overlap, the lockout map should prevent overlap of lockout areas. Lockout map and interrogator code allocation is coordinated by EuroControl Modes Interrogator Code Allocation cell (MICA).

In addition, or as an alternative, tracks outside of the DOC range can be filtered out and not considered for assessment.

The CCD may also apply some filtering with respect to the height of the aircraft flight paths.

For example, tracks of aircraft at low heights need not be assessed. Preferably, aircraft tracks can be banded into selectable height groups for assessment. These height groups or bands should be sufficiently narrow to reduce the effects of the vertical polar diagram (VPD) of the interrogator, but should be sufficiently wide to capture a large enough sample of tracks. **Figure 2** shows one example of how heights can be grouped into height bands. Of course other height bands and groupings can be selected.

Similarly, or alternatively, the CCD can band aircraft tracks into selectable or configurable azimuth sectors for assessment. These sectors should be sufficiently wide to encompass a large enough number of aircraft tracks for assessment but should preferably be narrow enough to allow clear identification of the possible source of the code conflict. The sector allocations or definitions can be optimised to meet operational requirements of the interrogator.

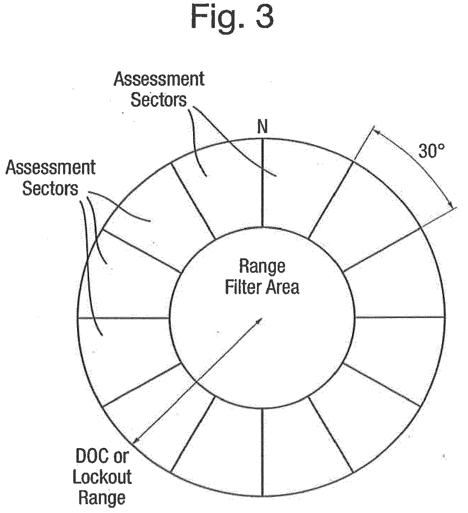

**Figure 3** shows one example of how a range can be divided into assessment sectors. Of course, other divisions can be selected.

Once any filtering, as appropriate, has been applied to the track data, the CCD will then process the data to identify a decrease in the range of detection of the interrogator in any one direction by comparing detection in that direction with the range of detection in one or more other directions.

If the assessment indicates that there is a sufficiently large difference in the range of detection in one direction compared to one or more other directions, this indicates that some external influence has affected the range of detection, for example overlapping detection range of an interrogator having the same IC code, causing code conflict as described above.

Whilst differences in range of detection can be determined by comparing track data for targets in any direction, in the most preferred embodiment a comparison is made between a range of inbound tracks and a range of outbound tracks.

Therefore, in this example, each track in the track data is assigned either "inbound" or "outbound" attributes.

In a preferred embodiment, to achieve more accurate results, the data might be filtered to exclude, for example, targets that have climbed into the range of coverage or descended out of the range of coverage from other heights. Each track, therefore, may only be flagged for inclusion in the assessment if the altitude of that track has remained relatively constant, e.g. within +/- 200 feet.

Similarly, the accuracy of the assessment can be improved by excluding targets that have turned and may have missed interrogations due to, for example, obscuration of the aircraft antenna. Each track, then, is only flagged for inclusion in the assessment if its heading has remained relatively constant for a certain number of scans (within +/- 5 degrees, for example).

In the most preferred assessment embodiment, the time and range of the first plot of a validated inbound track is allocated to the relevant sector/height bin for assessment and the time and range of the last plot of a validated outbound track is allocated to the relevant sector/height bin for assessment.

In the most simple embodiment, the range of detection of one or more inbound track signals can be compared with the range of detection of one or more outbound track signals. A difference of above a predetermined threshold would be an indication of the range of detection being different for different directions and, therefore, an indication of IC code conflict.

There are various ways, however, in which the accuracy of the system can be improved, in preferred embodiments.

To reduce the effects of variability of aircraft transponder sensitivity and the interrogator Horizontal Polar Diagram, a statistical average range of the last 'n' tracks in a particular sector/height bin may be calculated.

The average range of the inbound tracks may be compared to the average range of the outbound tracks.

A long term average of all tracks assessed may indicate the overall performance of the Mode S interrogator.

A short term average of tracks assessed may be used to identify possible code conflicts arising in a particular sector.

A time that track data is held for assessment in each sector/range bin for the short term average should be specified to ensure that inbound and outbound tracks are compared over a similar period. This will depend on the traffic levels in each sector/range.

The threshold difference indicative of an IC code conflict can be configurable and will depend on various factors. There will inevitably be some variation between maximum inbound and outbound range detection due to interrogator transmitter/receiver characteristics, transponder sensitivity and aircraft antenna characteristics. An appropriate difference threshold can be selected depending on the circumstances.

To quantify the variability, the average difference between inbound and outbound range for any particular height band over all sectors may be calculated and compared to that measured for a particular sector. Code conflict will result in a particular sector or sectors having a much greater difference between inbound and outbound detection range.

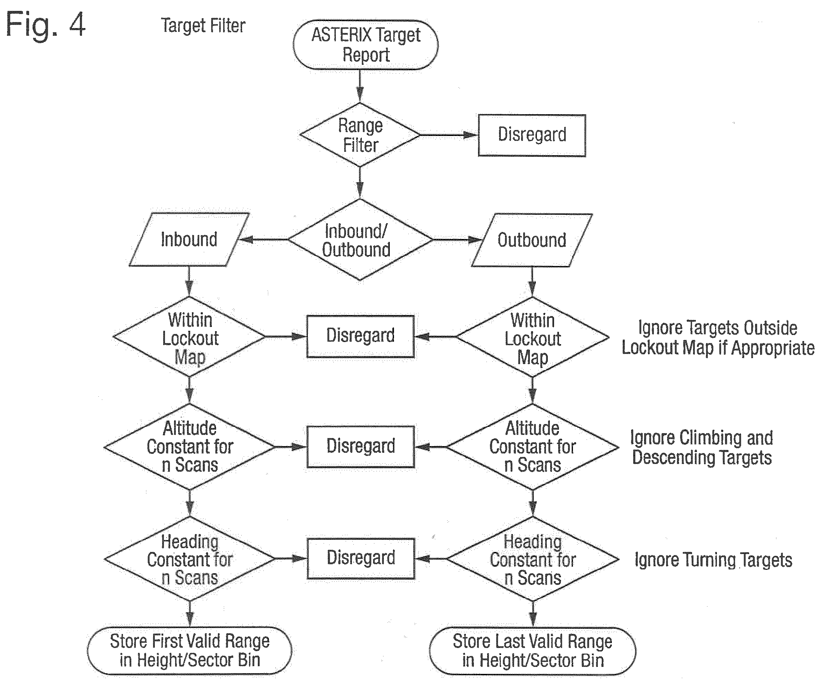

**FIG. 4** is a flow diagram showing how the received signals can be filtered for analysis.

The code conflict detector receives tracking signals from the interrogator, for example an ASTERIX target report.

Although not essential, this data is preferably filtered, using one or more of the filtering preferences mentioned above. Signals filtered out, for example very low level signals or signals outside of the range of detection, are disregarded.

The signals from the interrogator are identified as inbound or outbound signals. The ranges for the inbound and outbound signals are then determined. The way in which the ranges can be determined is not crucial to the basic concept of this invention and it is possible just to measure the ranges of the inbound and outbound signals.

Most preferably, however, some filtering is performed on the inbound and outbound signals to improve detection sensitivity.

One or more of the following filtering features may be used:
The CCD can determine whether or not the signals are within a predetermined lockout map and any signals outside of the lockout map are disregarded.

Only signals with a relatively constant altitude might be selected, with those of changing amplitude, for example climbing and descending targets, being disregarded.

Turning targets, indicated, for example, by a non-constant heading over a given number of scans can also be disregarded.

The flow diagram shows all three of these filtering steps being taken, in order. In practice, however, filtering need not be used at all or any one of these filtering steps that can be used either alone or in combination with any of the others and in any order.

After any desired filtering has been performed on the inbound and outbound signals, the identified ranges for those signals are preferably stored. In the Examples shown, the first valid range for the inbound signals is stored together with an identification of height and sector and, for the outbound signals, the last valid range is stored with an indication of height and sector.

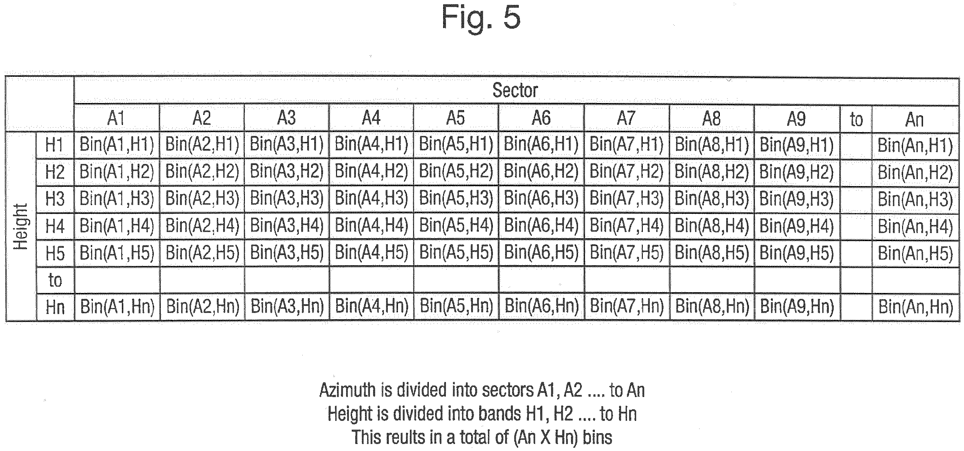

**FIG. 5** shows how the sector/height bins might be arranged.

The signals from the interrogator, after any filtering, if appropriate, can be stored in data bins for improved processing and identification of IC conflict sources.

In one example, the data may be stored in a number of bins identified by azimuth and height. Azimuth is divided into sectors A1, A2... to An. Height is divided into bands H1, H2... to Hn. This results in a total of An x Hn bins.

In accordance with Fig. 5, inbound data and outbound data, at appropriate filtering, is stored in appropriate sector-height bins. Of course these bins are examples only and other arrangements could be chosen.

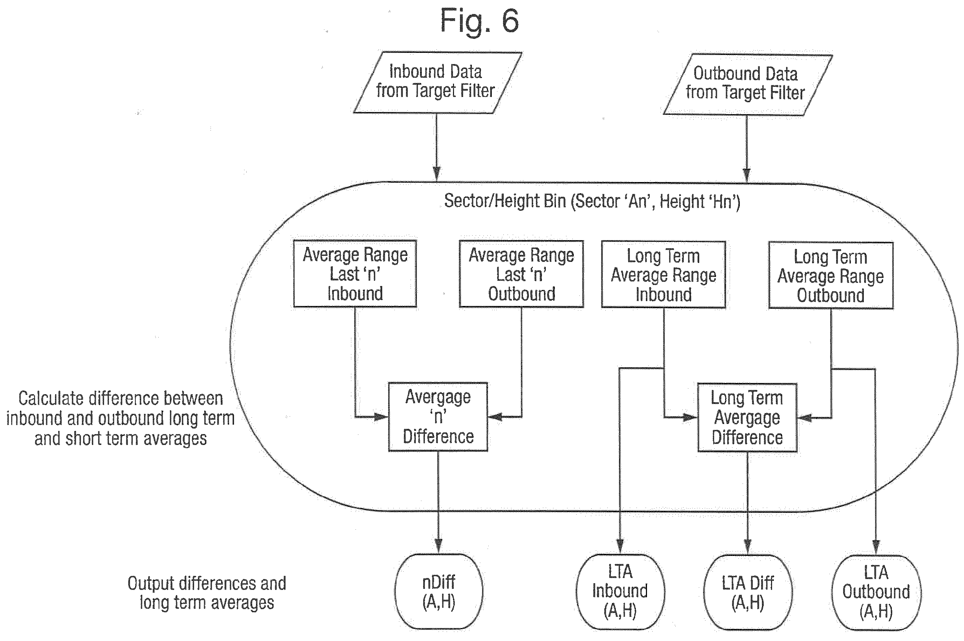

**FIG. 6** shows how the sector/height bin data might be processed.

Long term and short term averages for each bin (A,H) are determined for the inbound and outbound signals and, for each bin A,H, a difference is determined and stored between the short term averages of inbound and outbound signals, and also between the long term averages of the inbound and outbound signals.

The differences between the inbound and outbound signals using both long term averages and short term averages are output and stored as well as the long term average values themselves.

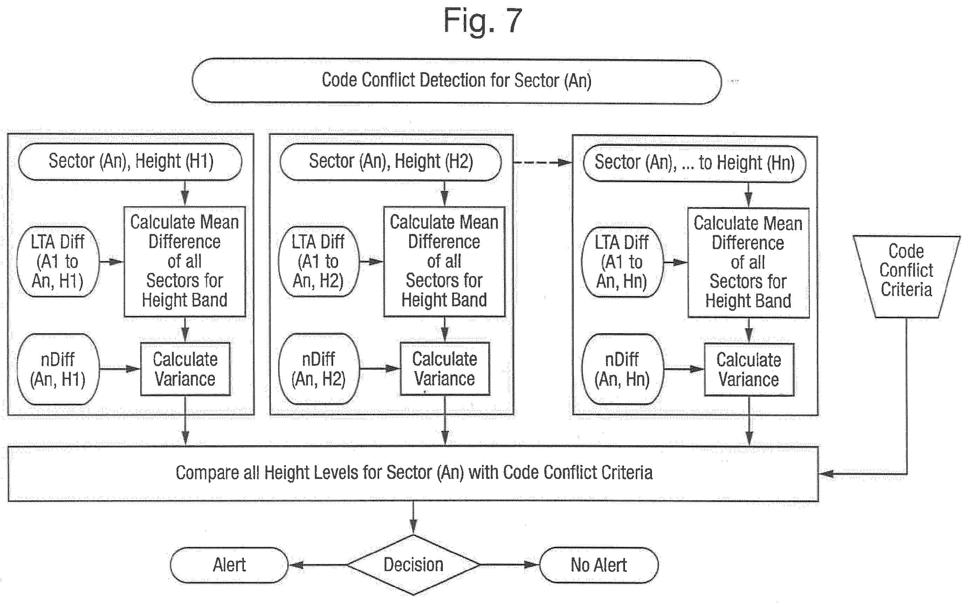

**FIG. 7** shows a flow diagram as to how code conflicts can be identified.

For any one sector An, the range is identified or determined for each height band H1, H2... Hn.

For example, for the first height H1 band, the long term average difference between inbound and outbound signals for each sector is used to calculate a mean difference for all sectors A1 to An for that height band H1.

Using this mean difference, together with the short term difference for the inbound and outbound signals for height H1, the variance in range for height H1 is determined.

The same processing is performed for height band H2 and for all of the other height bands up to height band Hn.

For each of these height levels, a comparison is made for each sector using pre-determined code conflict criteria and a decision is made as to whether the inbound and outbound ranges differ by more than a predetermined threshold, indicating the effect of code conflict.

If code conflict is identified, an alert may be provided.

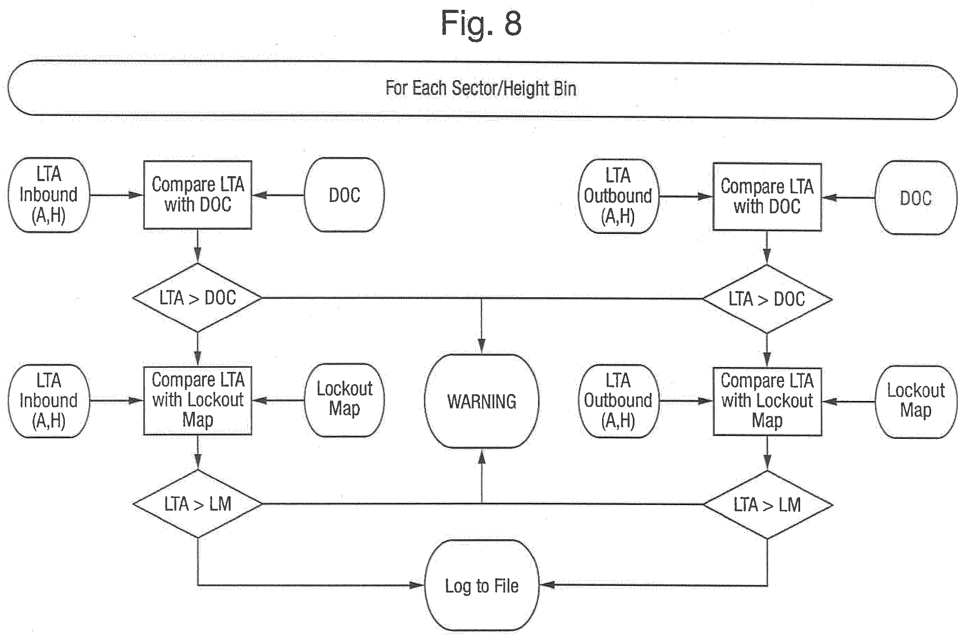

The long term average values may also be used to monitor performance of the system as shown, for example, in the flow diagram of Fig. 8.

For each sector/height bin, the long term average of inbound signals for that bin (A,H) is compared with the designated operational coverage (DOC) for that interrogator.

If the long term average exceeds the DOC, the long term average for the inbound signals for that sector/height bin (A,H) is compared with a lockout map, if provided.

In the event that the long term average is less than the DOC, or is less than the lockout map value, a warning of performance issues can be provided.

The same steps are performed for the outbound signals for each sector/height bin (A,H).

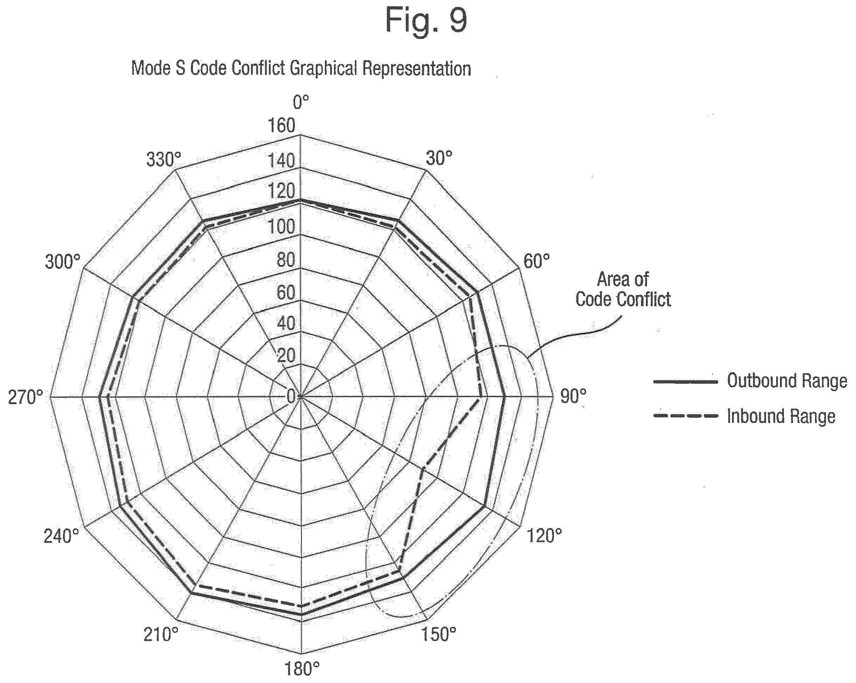

**FIG. 9** is a graphical representation of the ranges identified for inbound and outbound signals to identify code conflict.

The analysis of the detected inbound and outbound ranges for the given sectors and heights can be graphically represented as shown in Fig 9.

In the example shown, between sectors 90° and 150°, there is significant difference in range between the outbound range and the inbound range which is indicative of a code conflict in that particular sector range.

In the event that the CCD identifies effects of an IC code conflict, an appropriate alert can be generated.

## Claims

1. An apparatus for identifying a reduction in a range of detection of a sensor for tracking aircraft moving within a given detection range, the sensor being a Mode S interrogator having a detection range overlapping with that of a second sensor of a second Mode S interrogator and both interrogators identified by the same interrogator code (IC);
the apparatus comprising means for receiving output signals from the sensor indicative of aircraft being tracked within the detection range of the sensor and a direction of movement of the aircraft within the detection range of the sensor;
means for comparing output signals for aircraft identified as moving in a first direction with output signals for aircraft identified as moving in an opposite direction; and
means for identifying a reduction in range of detection in response to the comparison indicating aircraft being tracked over a greater distance when travelling in one of the directions compared to the other.

2. A system comprising an aircraft to be tracked and an interrogator comprising a sensor having a range of detection, the sensor arranged to monitor the aircraft when in its range of detection, the aircraft having means for transmitting an aircraft identification code, the sensor being configured to receive the aircraft identification code and the sensor also having an associated interrogator identification code, the sensor being a Mode S interrogator having a detection range overlapping with that of a second sensor of a second Mode S interrogator and both interrogators identified by the same interrogator code (IC); the system further comprising an apparatus according to claim 1.

3. A method for identifying a reduction in a range of detection of a sensor for tracking objects moving within a given detection range, the sensor being a Mode S interrogator having a detection range overlapping with that of a second sensor of a second Mode S interrogator and both interrogators identified by the same interrogator code (IC), the method
comprising:
receiving output signals from the sensor indicative of aircraft being tracked within the detection range of the sensor and a direction of movement of the aircraft within the detection range of the sensor;
comparing output signals for aircraft identified as moving in a first direction with output signals for aircraft identified as moving in an opposite direction; and
identifying a reduction in range of detection in response to the comparison indicating aircraft being tracked over a greater distance when travelling in one of the directions compared to the other.

4. The apparatus, system or method of the preceding claims, where one of the first and opposite directions is an inbound direction with respect to the aircraft entering the range of detection and the other is an outbound direction.

5. The apparatus, system or method of any preceding claim wherein the output signals are filtered to remove signals prior to comparing.

## Patentansprüche

1. Ein Gerät zur Erfassung einer Schwindung in einer Erfassungsspanne eines Sensors zur Verfolgung von Fortbewegungen von Flugzeugen innerhalb einer bestimmten Erfassungsspanne, wobei der Sensor ein Modus-S-Abfragesystem mit einer Erfassungsspanne ist, die sich mit der eines zweiten Sensors eines zweiten Modus-S-Abfragesystems überschneidet, und wobei beide Abfragesysteme durch denselben Abfragecode (IC) identifiziert werden; **dadurch gekennzeichnet, dass** das System folgendes umfasst:
- Mittel zum Empfang von Ausgangssignalen aus einem Sensor, die die Verfolgung eines Flugzeugs innerhalb der Erfassungsspanne des Sensors sowie eine Fortbewegungsrichtung des Flugzeugs innerhalb der Erfassungsspanne des Sensors erkennen lassen;
- Mittel zum Vergleich von Ausgangssignalen für Flugzeuge, die als sich in eine erste Richtung fortbewegend identifiziert werden, mit Ausgangssignalen für Flugzeuge, die als sich in die entgegengesetzte Richtung fortbewegend identifiziert werden; und
- Mittel zum Empfang einer Schwindung in der Erfassungsspanne als Antwort auf den Vergleich, der die Verfolgung des Flugzeugs über eine größere Entfernung erkennen lässt, wenn es sich in eine der beiden Richtungen im Vergleich zu anderen fortbewegt.

2. Ein System, das ein zu verfolgendes Flugzeug und ein Abfragesystem umfasst, das einen Sensor mit einer Erfassungsspanne umfasst, wobei der Sensor konfiguriert ist, um das Flugzeug zu überwachen, wenn es sich in seiner Erfassungsspanne befindet, wobei das Flugzeug über Mittel zur Übertragung eines Flugzeugidentifizierungscode verfügt, wobei der Sensor konfiguriert ist, um den Flugzeugidentifizierungscode zu empfangen und wobei der Sensor ebenfalls einen assoziierten Abfrage-Identifizierungscode besitzt, wobei der Sensor ein Modus-S-Abfragesystem mit einer Erfassungsspanne ist, die sich mit der eines zweiten Sensors eines zweiten Modus-S-Abfragesystems überschneidet, und wobei beide Abfragesysteme durch denselben Abfragecode (IC) identifiziert werden; **dadurch gekennzeichnet, dass** das System darüber hinaus ein Gerät gemäß Anspruch 1 umfasst.

3. Ein Verfahren zur Erfassung einer Schwindung in einer Erfassungsspanne eines Sensors zur Verfolgung von Fortbewegungen von Objekten innerhalb einer bestimmten Erfassungsspanne, wobei der Sensor ein Modus-S-Abfragesystem mit einer Erfassungsspanne ist, die sich mit der eines zweiten Sensors eines zweiten Modus-S-Abfragesystems überschneidet, und wobei beide Abfragesysteme durch denselben Abfragecode (IC) identifiziert werden; **dadurch gekennzeichnet, dass** das Verfahren folgendes umfasst:
- Empfang von Ausgangssignalen aus einem Sensor, die die Verfolgung eines Flugzeugs innerhalb der Erfassungsspanne des Sensors sowie eine Fortbewegungsrichtung des Flugzeugs innerhalb der Erfassungsspanne des Sensors erkennen lassen;
- Vergleich von Ausgangssignalen für Flugzeuge, die als sich in eine erste Richtung fortbewegend identifiziert werden, mit Ausgangssignalen für Flugzeuge, die als sich in die entgegengesetzte Richtung fortbewegend identifiziert werden; und
- Empfang einer Schwindung in der Erfassungsspanne als Antwort auf den Vergleich, der die Verfolgung des Flugzeugs über eine größere Entfernung erkennen lässt, wenn es sich in eine der beiden Richtungen im Vergleich zu anderen fortbewegt.

4. Das Gerät, das System oder das Verfahren gemäß der vorstehenden Ansprüche, **dadurch gekennzeichnet, dass** eine der ersten und der entgegengesetzten Richtungen eine eingehende Richtung in Bezug auf das Flugzeug ist, welches in die Erfassungsspanne eintritt, und die andere Richtung eine ausgehende Richtung ist.

5. Das Gerät, das System oder das Verfahren gemäß einem der vorstehenden Ansprüche, **dadurch gekennzeichnet, dass** die Ausgangssignale gefiltert werden, um vor dem Vergleich Signale zu entfernen.

## Revendications

1. Appareil pour identifier une réduction d'une plage de détection d'un capteur pour suivre le déplacement d'un aéronef à l'intérieur d'une plage de détection donnée, le capteur étant un interrogateur en Mode S ayant une plage de détection chevauchant celle d'un second capteur d'un second interrogateur en Mode S et les deux interrogateurs étant identifiés par le même code d'interrogateur (IC) ;
l'appareil comprenant un moyen pour recevoir des signaux de sortie en provenance du capteur indicatifs d'un aéronef étant suivi à l'intérieur de la plage de détection du capteur et un sens de déplacement de l'aéronef à l'intérieur de la plage de détection du capteur ;
un moyen pour comparer des signaux de sortie pour l'aéronef identifié comme se déplaçant dans un premier sens à des signaux de sortie pour l'aéronef identifié comme se déplaçant dans un sens opposé ; et
un moyen pour identifier une réduction de plage de détection en réponse à la comparaison indiquant un aéronef étant suivi sur une distance plus grande en voyageant dans un des sens en comparaison à l'autre.

2. Système comprenant un aéronef à suivre et un interrogateur comprenant un capteur ayant une plage de détection, le capteur étant agencé pour contrôler l'aéronef quand il est dans sa plage de détection, l'aéronef ayant un moyen pour émettre un code d'identification d'aéronef, le capteur étant configuré pour recevoir le code d'identification d'aéronef et le capteur ayant également un code d'identification d'interrogateur associé, le capteur étant un interrogateur en Mode S ayant une plage de détection chevauchant celle d'un second capteur d'un second interrogateur en Mode S et les deux interrogateurs étant identifiés par le même code d'interrogateur (IC) ; le système comprenant en outre un appareil selon la revendication 1.

3. Procédé pour identifier une réduction d'une plage de détection d'un capteur pour suivre des objets se déplaçant à l'intérieur d'une plage de détection donnée, le capteur étant un interrogateur en Mode S ayant une plage de détection chevauchant celle d'un second capteur d'un second interrogateur en Mode S et les deux interrogateurs étant identifiés par le même code d'interrogateur (IC), le procédé comprenant :
la réception de signaux de sortie en provenance du capteur indicatifs d'un aéronef étant suivi à l'intérieur de la plage de détection du capteur et un sens de déplacement de l'aéronef à l'intérieur de la plage de détection du capteur ;
la comparaison de signaux de sortie pour l'aéronef identifié comme se déplaçant dans un premier sens à des signaux de sortie pour l'aéronef identifié comme se déplaçant dans un sens opposé ; et
l'identification d'une réduction dans une plage de détection en réponse à la comparaison indiquant qu'un aéronef étant suivi sur une distance plus grande en voyageant dans un des sens en comparaison à l'autre.

4. Appareil, système ou procédé selon les revendications précédentes, où un des premier et opposé sens est un sens d'arrivée en ce qui concerne l'aéronef entrant dans la plage de détection et l'autre est un sens de départ.

5. Appareil, système ou procédé selon l'une quelconque des revendications précédentes, dans lesquels les signaux de sortie sont filtrés pour enlever des signaux avant la comparaison.
